# FASCICULE DE BREVET EUROPEEN

(11) **EP 0 764 566 B1**
(45) Date de publication et mention de la délivrance du brevet: **22.03.2000**
(21) Numéro de dépôt: 96114638.8
(22) Date de dépôt: 12.09.1996
(51) Int. Cl.: B60R 25/02

(54) **Antivol électrique motorisé de direction de véhicule automobile**
Elektrisch angetriebenes Lenkradschloss für Kraftfahrzeuge
Electrically driven vehicle steering lock

(30) Priorité: 21.09.1995 FR 9511187
(43) Date de publication de la demande: 26.03.1997
(73) Titulaire: VALEO SECURITE HABITACLE, 94000 Créteil (FR)
(72) Inventeur: Peyre, Jean, 78800 Houilles (FR); Demouy, Olivier, 94300 Vincennes (FR); Humbert, Arnaud, 94500 Champigny sur Marne (FR)
(74) Mandataire: Kohn, Philippe

(56) Documents cités:
- EP-A- 0 373 035
- WO-A-92/16395
- DE-A- 2 115 133
- FR-A- 2 543 085
- FR-A- 2 615 892

## Description

La présente invention concerne un antivol motorisé de direction de véhicule automobile.

Selon la conception la plus largement répandue, un antivol de direction de véhicule automobile comporte un pêne de verrouillage coulissant dont une extrémité est reçue dans un logement formé dans un organe rotatif de la colonne de direction, sous l'action de moyens élastiques de rappel, et il comporte des moyens d'escamotage du pêne, à l'encontre de l'effort de rappel qui lui est appliqué par les moyens élastiques, pour libérer la colonne de direction.

Selon la conception d'un antivol de direction du type mécanique, les moyens d'escamotage sont des moyens mécaniques sur lesquels le conducteur agit par l'intermédiaire d'un verrou commandé par une clé et dont l'organe de sortie, à travers une transmission mécanique, agit sur le pêne de verrouillage pour l'escamoter à l'encontre de ces moyens élastiques de rappel.

Selon une nouvelle conception connue, décrite et représentée dans le document FR-A-2.710.599, il a déjà été proposé un procédé de contrôle d'un antivol de véhicule automobile, notamment avec un système d'accès par commande à distance, comportant un système mécanique utilisant un moteur électrique tournant et dans lequel, quand le système de gestion des accès de véhicule reconnaît un droit d'accès et une demande d'accès, un organe de commande produit un ordre d'actionnement qui excite le moteur électrique tournant. L'antivol change alors d'état en passant de l'état verrouillé à l'état déverrouillé.

Les moyens d'escamotage proposés dans ce document comportent, outre le moteur électrique tournant, des moyens de transmission par l'intermédiaire desquels l'arbre de sortie du moteur agit sur des mâchoires de verrouillage montées pivotantes et dont chacune est susceptible d'être reçue dans un cran de l'arbre de la colonne de direction.

Cette conception est satisfaisante, mais elle est encombrante et elle nécessite de modifier l'implantation de l'antivol proprement dit sur la colonne de direction et ne peut donc pas être utilisée en lieu et place d'un antivol mécanique classique.

On a proposé dans le document WO-A-92/16395, comportant les caractéristiques du préambule de la revendication 1, un antivol dans lequel l'élément formant pêne porte une crémaillère longitudinale qui est entraînée en rotation par un pignon porté par l'arbre de sortie d'un moteur électrique dont l'arbre de sortie d'un moteur électrique dont l'axe est perpendiculaire à la direction longitudinale de coulissement du pêne, l'ensemble présentant ainsi un encombrement important.

Le document FR-A-2.615.892 décrit et représente un antivol dans lequel un organe de verrouillage du pêne est entraîné en translation dans les deux sens par un moteur électrique dont l'arbre de sortie est une vis qui coopère avec une roue d'axe fixe perpendiculaire à l'arbre de sortie, la roue de l'ensemble roue/vis sans fin entraînant un mécanisme complexe à came et contre-came. Outre sa complexité et son encombrement global, un tel agencement n'est pas transposable pour la commande du pêne de verrouillage car le mécanisme à came et contre-came permettrait de faire reculer manuellement en vue d'une effraction.

La présente invention a pour but de proposer une nouvelle conception d'un antivol électrique motorisé de direction de véhicule automobile du type mentionné précédemment qui permet de remédier à ces inconvénients.

Dans ce but, l'invention propose un antivol caractérisé en ce que les moyens d'escamotage comportent un moteur électrique tournant dont l'arbre de sortie agit sur un pêne de verrouillage coulissant par l'intermédiaire de moyens de transmission qui convertissent son mouvement de rotation en un mouvement de translation rectiligne parallèle à la direction de coulissement du pêne, en ce que l'axe de rotation du moteur électrique est agencé parallèlement à la direction de coulissement du pêne, et les moyens de transmission comportent un mécanisme du type vis-écrou dont la vis est liée en rotation au pêne de verrouillage et est immobilisée en rotation, en ce que l'écrou du mécanisme vis-écrou est un pignon denté taraudé en son centre et qui coopère avec un pignon d'entraînement entraîné en rotation par le moteur électrique, et il est immobilisé en translation.

Selon d'autres caractéristiques de l'invention :
- le pignon d'entraînement est porté par l'arbre de sortie du moteur électrique ;
- le pêne de verrouillage est lié en translation à un coulisseau sur lequel agissent des moyens élastiques de rappel qui sollicitent en permanence le pêne vers sa position de verrouillage, et le coulisseau est lié en translation à l'organe de sortie des moyens de transmission par des moyens de liaison qui autorisent un déplacement relatif du coulisseau par rapport à l'organe de sortie, à l'encontre de l'effort exercé par les moyens élastiques de rappel ;
- l'organe de sortie est constitué par une extrémité de la vis du mécanisme vis-écrou qui est reçue en coulissement dans une lumière du coulisseau dont les extrémités opposées délimitent la course maximale de déplacement relatif du coulisseau par rapport à la vis ;
- l'antivol comporte un boîtier dans lequel la vis du mécanisme vis-écrou est guidée en translation et est immobilisée en rotation, et qui comporte un logement pour l'écrou du mécanisme et un logement pour le corps du moteur électrique ;
- le coulisseau est guidé en coulissement dans le boîtier et les moyens élastiques de rappel du coulisseau sont interposés entre le boîtier et le coulisseau ;
- l'antivol comporte des moyens de butée pour limiter la rotation de l'écrou par rapport à la vis du mécanisme vis-écrou pour déterminer les deux positions extrêmes de la vis par rapport à l'écrou.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée des principaux composants d'un antivol électrique réalisé conformément aux enseignements de l'invention, en association avec les éléments d'une colonne de direction de véhicule automobile ;
- la figure 2 est une vue en perspective éclatée, selon un angle différent et à plus grande échelle, des principaux composants de l'antivol ;
- les figures 3, 4 et 5 sont des vues qui représentent les principaux composants de l'antivol en position assemblée et qui illustrent trois positions différentes de l'antivol en association avec un tronçon de l'arbre de la colonne de direction ; et
- les figures 6 à 9 sont des vues en perspective, à grande échelle et selon des angles différents du mécanisme vis-écrou et du coulisseau avec des positions relatives différentes de l'écrou par rapport à la vis.

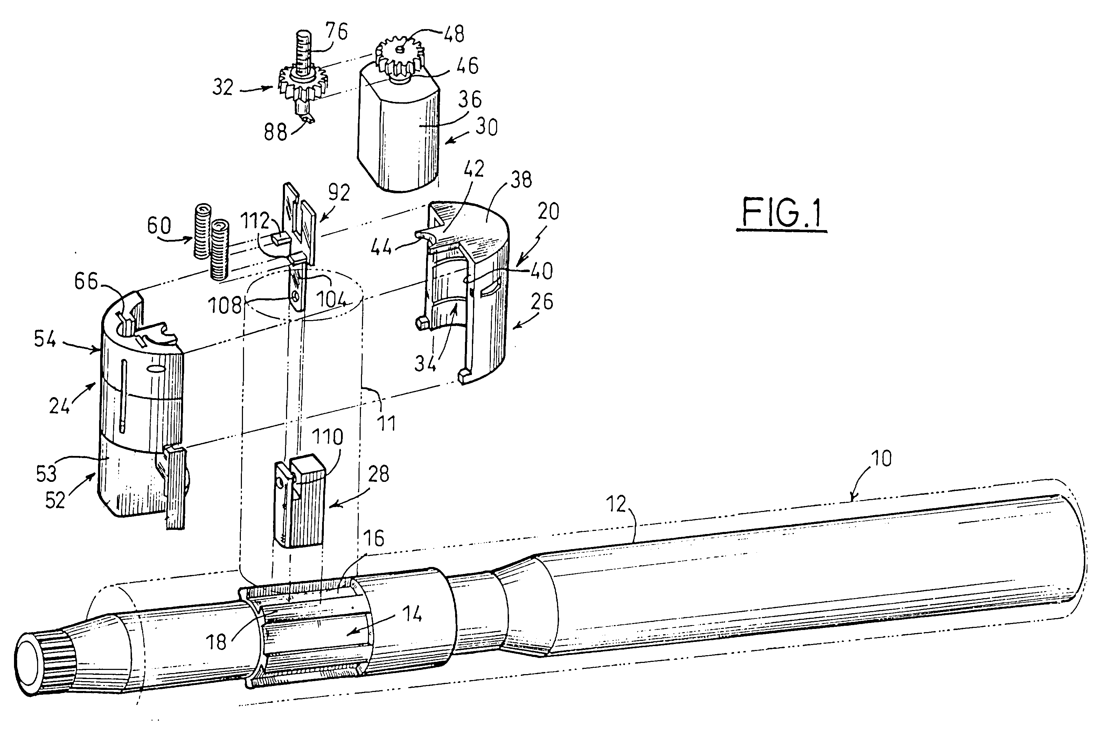

On a représenté en silhouette sur la figure 1 un tube 10 de colonne de direction d'un véhicule automobile à l'intérieur duquel est monté à rotation un arbre de colonne de direction 12.

L'arbre 12 est muni d'un manchon cannelé 14 qui détermine une série de rainures axiales parallèles 16 séparées par des nervures 18.

En regard du moyeu cannelé 14, le tube de colonne 10 porte un tube d'antivol 11 rapporté par soudage et qui s'étend radialement pour recevoir les composants d'un mécanisme d'antivol 20 qui, dans le cadre de l'invention, est un mécanisme d'antivol électrique motorisé.

Selon un aspect de l'invention, le tube de colonne de direction 10 et le tube d'antivol 11 sont des composants standard prévus à l'origine pour recevoir un mécanisme d'antivol à commande mécanique selon l'état de la technique et qui peuvent recevoir un antivol électrique motorisé 20 conforme aux enseignements de l'invention sans modification de la conception et des dimensions des éléments 10 et 11.

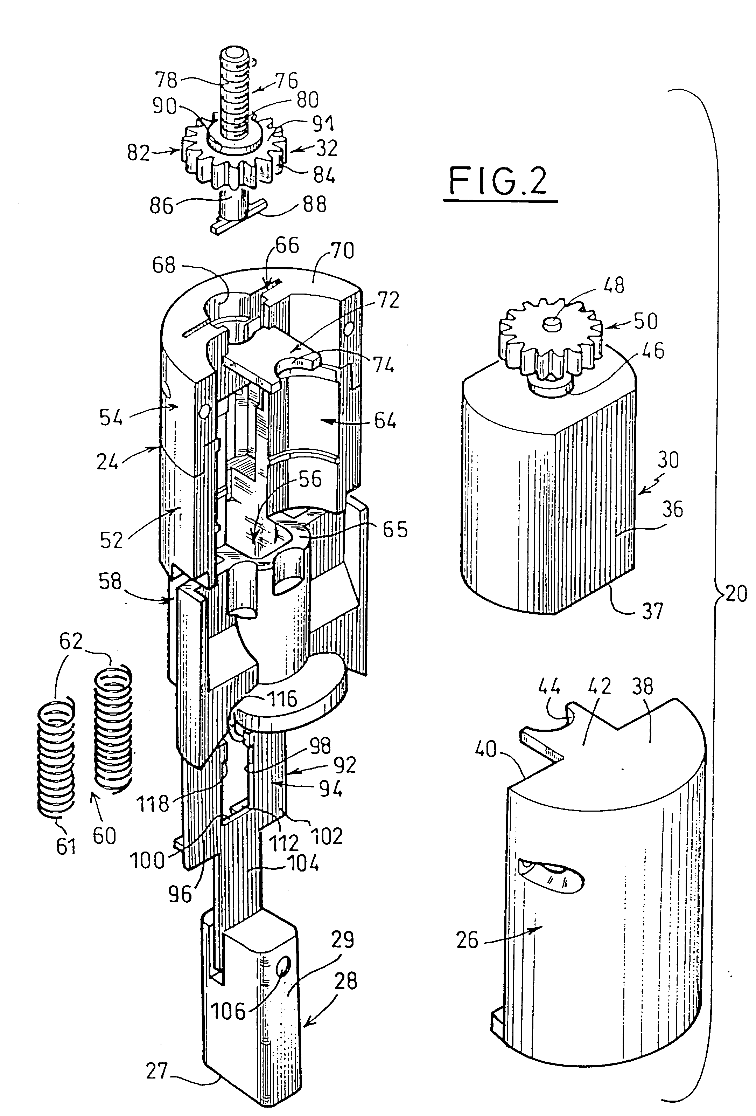

Comme on peut le voir aux figures 1 et 2, l'antivol 20 comporte un boîtier constitué par deux demi-coquilles 24 et 26, chacune de forme générale semi-cylindrique, et qui, en position assemblée, présente une forme générale cylindrique susceptible d'être reçue à l'intérieur du tube d'antivol 11.

Le boîtier 24-26 est conçu pour recevoir en coulissement, selon une direction de coulissement parallèle à l'axe général du tube d'antivol 11 et du boîtier, un pêne de verrouillage 28 dont les déplacements sont commandés par un moteur électrique tournant 30, agencé dans le boîtier, qui agit sur le pêne de verrouillage 28 par un mécanisme de transmission 32 du type vis-écrou.

La demi-coquille 26 délimite intérieurement un logement 34 de forme générale semi-cylindrique qui reçoit une partie du corps 36 du moteur 30.

La face supérieure fermée 38 de la demi-coquille 26 se prolonge radialement au-delà de sa face axiale ouverte 40 par une patte 42 dont l'extrémité libre de forme semi-cylindrique 44 est destinée à coopérer avec un épaulement 90 de l'écrou 82 du mécanisme 32.

L'arbre de sortie 48 porte et entraîne à rotation un pignon 50 d'entraînement du mécanisme de transmission 32 qui, en position assemblée du boîtier, s'étend donc à l'extérieur et au-dessus de la face supérieure 38.

La demi-coquille 24 du boîtier d'antivol comporte une partie inférieure 52 pour le guidage en coulissement du corps du pêne de verrouillage 28 et une partie supérieure 54 qui reçoit le mécanisme de transmission 32 et qui participe au maintien et au positionnement du moteur électrique 30.

La partie inférieure 52 est d'une conception générale connue et elle délimite essentiellement un logement formant glissière 56, de section transversale rectangulaire sensiblement complémentaire de celle du corps 29 du pêne de verrouillage 28, qui sert au coulissement de ce dernier en translation selon une direction générale parallèle à l'axe du boîtier 24, 26 de l'antivol, et donc parallèle à l'axe de rotation de l'arbre de sortie 48 du moteur 30.

La partie inférieure 52 de la demi-coquille 24 comporte deux dégagements 58 formés de part et d'autre du logement 56, qui s'étendent radialement vers l'intérieur depuis la paroi cylindrique externe 53 et dont chacun est prévu pour recevoir un ressort hélicoïdal de compression 60 appartenant à une paire de ressorts qui constituent les moyens élastiques de rappel du pêne de verrouillage 28 vers sa position verrouillée, comme cela sera expliqué par la suite.

A cet effet, l'extrémité supérieure 62, en considérant les figures 1 et 2, de chacun des ressorts 60 prend appui contre la face transversale supérieure de chacun des logements 58.

Au-dessus de la glissière 56 du pêne de verrouillage 28, la partie inférieure 52 de la demi-coquille 24 comporte également un logement semi-cylindrique 64 complémentaire du logement 34 formé dans la demi-coquille 26 qui reçoit le corps 36 du moteur électrique 30.

La partie supérieure 54 de la demi-coquille 24 qui s'étend dans le prolongement de cette dernière comporte une fente 66 qui s'étend verticalement parallèlement à l'axe général du boîtier ainsi qu'un logement vertical cylindrique 68 qui débouche verticalement à ses deux extrémités, et notamment dans la face supérieure 70 de la partie supérieure 54 de la demi-coquille 24, pour le passage de la vis du mécanisme de transmission 32.

La partie supérieure 54 comporte également une patte transversale 72 similaire à la patte 42 de la demi-coquille 26 dont l'extrémité de profil cylindrique 74 participe au maintien du palier 46 du moteur dans lequel l'arbre 48 est monté à rotation.

Le mécanisme de transmission 32 est un mécanisme du type vis-écrou.

Il comporte ainsi une vis 76 dont le corps fileté 78 est monté vissé dans un taraudage central 80 de l'écrou 82 du mécanisme 32 qui constitue également un pignon denté 84 qui, en position assemblée, est en permanence en prise avec le pignon d'entraînement 50 du moteur électrique 30.

La partie inférieure 86 de la vis 76 se termine par une barre transversale 88 d'entraînement du pêne 28.

Le guidage en rotation de l'écrou 82 est, en position assemblée des composants, complété par la coopération de l'épaulement 90 formé sur la face supérieure 91 du pignon qui est reçu dans la partie cylindrique complémentaire 44 de la patte 42 de la demi-coquille 26, tandis que le maintien en position du moteur 30 dans le boîtier est complété par la coopération de la partie semi-cylindrique 74 de la patte 72 de la demi-coquille 24 avec le palier 46 du moteur 30.

La position verticale du corps 36 du moteur électrique 30 est déterminée par la venue en appui axial de sa face inférieure 37 sur la face transversale 65 qui délimite le logement 64 vers le bas.

La liaison entre le mécanisme 32 et le corps 29 du pêne de verrouillage 28 est assurée au moyen d'un coulisseau 92 en forme générale de plaque verticale dont la partie supérieure 94, qui présente une silhouette générale en forme de U, est reçue en coulissement dans la fente verticale 66.

Les deux branches verticales 96 de la partie supérieure 94 délimitent verticalement une lumière 98 dont le bord inférieur 100 est délimité par la branche inférieure horizontale 102 de la partie supérieure 94.

Le coulisseau 92 comporte également une patte verticale inférieure 104 qui prolonge la partie supérieure 94 et qui est relié au corps 29 du pêne de verrouillage 28 par une goupille 106 qui traverse le corps 29 et un trou 108 formé dans la partie 104, cette dernière étant reçue dans une fente 110 du corps 29.

Le pêne de verrouillage 28 est ainsi lié en translation au coulisseau 92, de manière univoque, ces deux éléments étant montés coulissants dans la demi-coquille 24.

La branche horizontale 102 de la partie supérieure 94 comporte deux pattes transversales 112 qui constituent des pattes d'appui pour les extrémités inférieures 61 des ressorts 60 de manière que les ressorts 60 sollicitent élastiquement et en permanence le coulisseau 92, et donc le pêne de verrouillage 28, verticalement vers le bas en considérant les figures, c'est-à-dire qu'ils sollicitent le pêne 28 vers sa position de verrouillage.

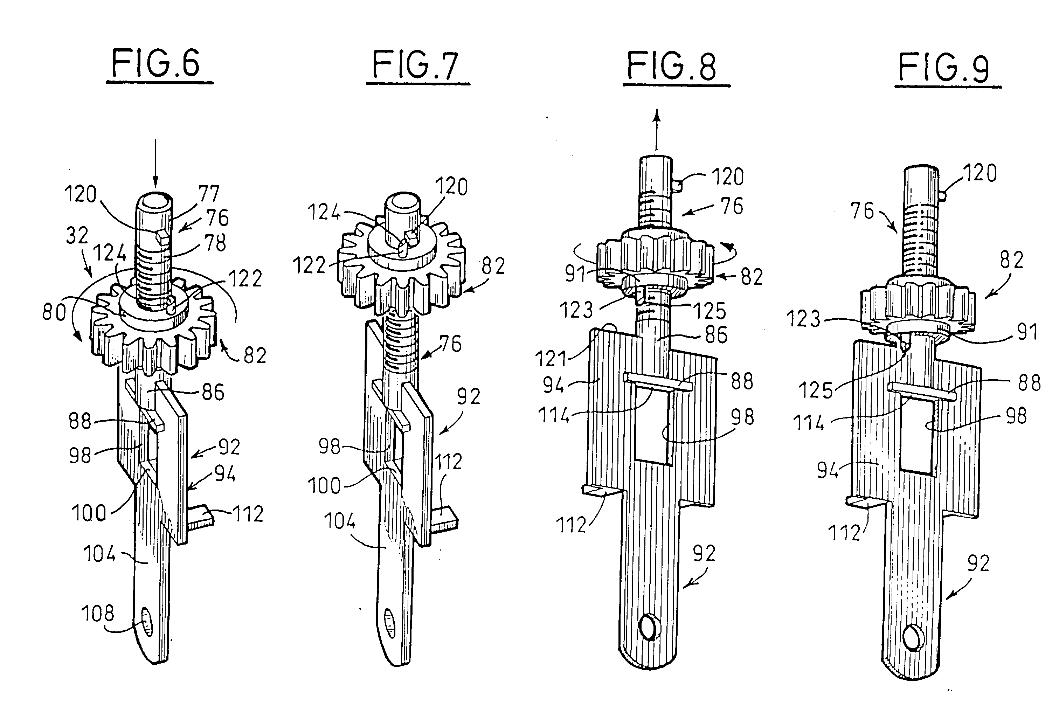

La barre d'entraînement 88 agencée à l'extrémité inférieure 86 de la vis 76 du mécanisme 32 comporte une partie centrale 114 (voir figures 8 et 9) de largeur transversale réduite qui correspond à la largeur transversale de la lumière 98 dans laquelle elle est reçue en coulissement tandis que l'extrémité inférieure 86 de la vis 76 est reçue entre les bords supérieurs 116 de la lumière 98.

Etant donné le diamètre de l'extrémité 86 qui est inférieur à la largeur de la partie centrale 114 de la barre 88, les bords 116 délimitent avec les bords longitudinaux parallèles de la lumière 98 un bord supérieur 118, en deux parties, de la lumière 98.

La barre 88 avec sa partie centrale 114 est donc ainsi susceptible de coulisser dans la lumière 98 entre deux positions extrêmes délimitées par le bord inférieur 100 et par le bord supérieur en deux parties 118.

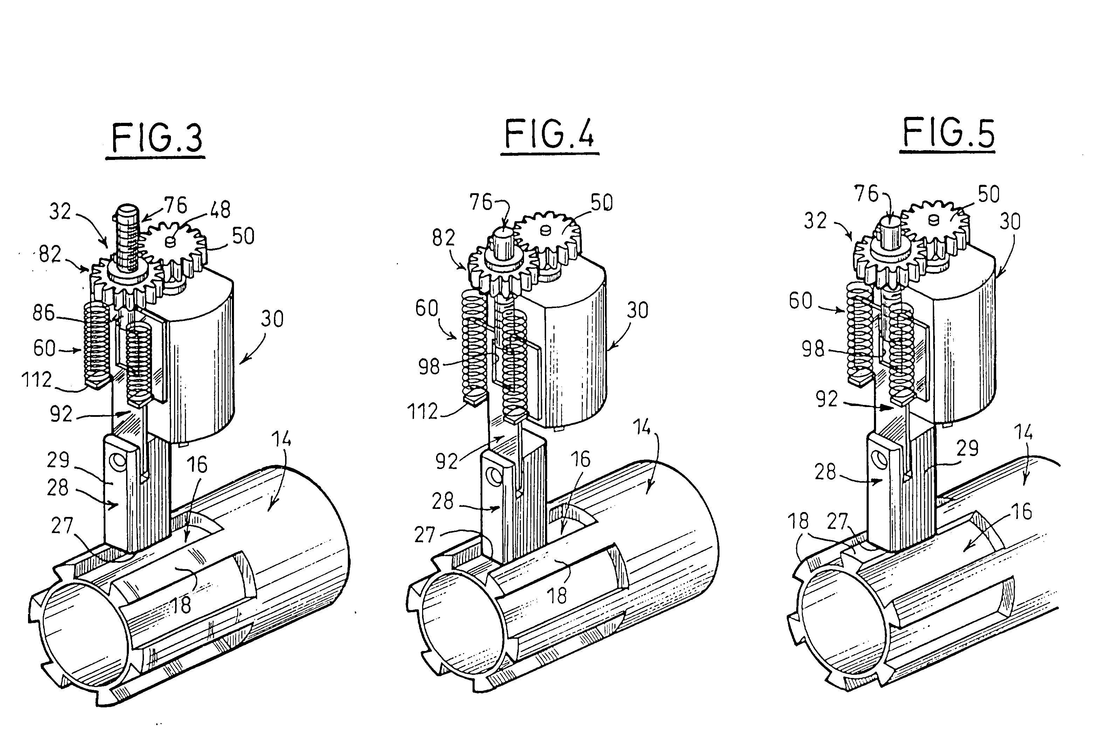

On décrira maintenant le principe de fonctionnement de l'antivol électrique motorisé conforme aux enseignements de l'invention en se reportant notamment aux figures 3 à 5.

Sur la figure 3, les principaux composants de l'antivol sont illustrés dans la position qu'ils occupent lorsque l'antivol est en position déverrouillée.

Dans cette position, la vis 76, et donc le coulisseau 92 et le pêne de verrouillage 28, sont en position "haute" dans laquelle le pêne de verrouillage 28 est escamoté en retrait à l'intérieur de l'antivol et sensiblement à l'intérieur du tube d'antivol 11.

Dans cette position, la face d'extrémité libre et inférieure 27 du pêne de verrouillage 28 est située hors des rainures 16 et au-dessus de la surface cylindrique externe des nervures 18 avec laquelle elle n'est pas en contact.

L'arbre 12 de direction qui est lié en rotation au manchon cannelé 14 peut donc tourner librement par rapport au tube de colonne de direction 10.

Les ressorts 60 sont comprimés axialement par les pattes 112 du coulisseau 92 qui est aussi en position haute.

Pour provoquer le déverrouillage de l'antivol, en partant de la figure 3, les moyens de commande électrique de l'antivol (non représentés) alimentent le moteur électrique 30 de manière à provoquer la rotation de son arbre de sortie 48 qui porte le pignon 50 et donc d'entraîner en rotation le pignon 82 du mécanisme vis-écrou 32.

Cette rotation, dans un premier sens, provoque alors un déplacement vertical de la vis 76 car elle est immobilisée en rotation du fait de son mode de liaison avec le coulisseau 92 et du fait du guidage de ce dernier dans la fente 66 de la demi-coquille 24 du boîtier.

Le mécanisme vis-écrou 32 convertit ainsi la rotation du pignon d'entraînement 50 en un mouvement de coulissement vertical, de haut en bas en considérant les figures 3 et 4, du coulisseau 92 et donc du pêne de verrouillage 28.

La descente progressive de la vis 76, et donc de son extrémité 86 qui porte la barre 88, permet au coulisseau 92 de descendre verticalement sous l'action des ressorts hélicoïdaux de rappel 60 qui se détendent en agissant sur les pattes 112.

Si le pêne 28 est en alignement avec une rainure axiale 16 du moyeu cannelé 14, comme cela est représenté sur la figure 4, sa face inférieure d'extrémité libre 27 pénètre dans la cannelure 16 en vis-à-vis pour assurer l'immobilisation en rotation du moyeu cannelé 14, et donc de l'arbre 12 de la colonne de direction.

La commande du moteur électrique 30 est telle qu'il effectue complètement un cycle de déverrouillage, c'est-à-dire que sa rotation se poursuit jusqu'à ce que la vis 76 du mécanisme vis-écrou 32 atteigne sa position inférieure maximale illustrée à la figure 4.

Comme cela est illustré à la figure 5, la phase de déverrouillage du pêne 28 peut se produire lorsque ce dernier est en regard de la face cylindrique externe d'une nervure 18 du moyeu cannelé 14.

Cette situation relative des différents composants n'empêche pas la commande du déverrouillage de l'antivol, le moteur 30 provoquant la descente complète de la vis 76 comme dans la position illustrée sur la figure 4.

Toutefois, le pêne de verrouillage 28, et donc le coulisseau 92, ne peuvent pas descendre complètement.

Cette situation est rendue possible grâce au coulissement relatif de l'extrémité inférieure 86 avec la barre d'entraînement 88 par rapport au coulisseau 92, du fait de l'aménagement de la lumière 98.

Les ressorts 60 sollicitent donc alors le coulisseau 92 et le pêne de verrouillage 28 verticalement vers le bas avec la face d'extrémité inférieure 27 du corps 29 du pêne 28 en appui contre une nervure 18.

Dans cette position, il existe un jeu vertical entre la partie centrale 114 de la barre d'entraînement 88 et le bord supérieur 118 de la lumière 98.

Le conducteur, pour compléter l'opération de verrouillage et d'une manière connue, provoque ensuite une rotation de l'arbre de direction 12 par rapport au tube 10 jusqu'à ce qu'une rainure axiale 16 vienne en regard du pêne 28, ce dernier tombant alors dans la rainure 16 sous l'action des ressorts 60 pour venir occuper sa position de verrouillage illustrée à la figure 4.

En partant de la position de verrouillage complet illustrée à la figure 4, le déverrouillage s'effectue de la manière suivante.

La centrale de commande de l'antivol provoque une alimentation du moteur 30 avec inversion de son sens de rotation.

Le moteur 30 avec son pignon 50 provoque alors à nouveau l'entraînement de l'écrou 82, dans l'autre sens, et provoque la sortie, c'est-à-dire le déplacement en translation de bas en haut en considérant la figure 4, de la vis 76 qui, par sa barre d'entraînement 88, 114 entraîne en translation, verticale de bas en haut, le pêne de verrouillage 28 hors de la rainure 16 pour qu'il vienne à nouveau occuper sa position déverrouillée illustrée sur la figure 3.

Cette opération de déverrouillage par entraînement en translation verticale vers le haut de la vis 76 et du coulisseau 92 s'effectue à l'encontre de l'effort exercé par les ressorts de rappel 60 qui sont à nouveau comprimés axialement.

Le cycle complet de déverrouillage se termine par arrêt du moteur 30 lorsque la vis 76 occupe à nouveau sa position extrême de déverrouillage illustrée sur la figure 3.

Conformément à un autre aspect de l'invention, et en référence aux figures 6 à 9, on expliquera maintenant en détail les moyens permettant de limiter la rotation relative de l'écrou 82 par rapport à la vis 76 du mécanisme 32 qui permettent d'éviter un coincement en positions extrêmes du mécanisme.

Pour déterminer la position extrême de déverrouillage de la vis 76 et comme on peut le voir notamment aux figures 6 et 7, la partie supérieure 77 de la vis 76 comporte un téton radial 120 qui est lié en rotation au corps de la vis 76 et qui susceptible de coopérer avec un pion 122 porté par l'écrou 82 qui s'étend axialement en saillie au-dessus de l'épaulement 90 et qui est monté coulissant axialement, à l'encontre de moyens élastiques de rappel (non représentés) pour pouvoir être escamoté. De plus, la face supérieure du pion 122 est inclinée en forme de rampe 124.

En partant de la position déverrouillée schématisée sur la figure 6 pour aller vers la position verrouillée illustrée sur la figure 7, l'écrou tourne dans le sens indiqué par la flèche de la figure 6 et la vis descend.

La rotation de l'écrou 82 se poursuit jusqu'à ce que, comme cela est illustré sur la figure 7, le pion 122 vienne buter contre l'ergot 120 qui bloque alors l'écrou 82 en rotation par rapport à la vis 76.

Lors du début du déverrouillage, l'écrou 82 tourne dans l'autre sens par rapport à la vis 76 et, au premier passage de l'ergot 120 en regard du pion 122, celui-ci s'escamote axialement grâce à la rampe 124 pour éviter un blocage en rotation de l'écrou 82 lors du début de la phase de déverrouillage tout en garantissant une bonne immobilisation du fait de la coopération de l'ergot 120 et du pion 122 en fin de phase de verrouillage.

De manière symétrique, et comme cela est illustré aux figures 8 et 9, la face inférieure de l'écrou 82 comporte un épaulement 91 qui porte un pion 123 similaire au pion 122 muni d'une rampe 125.

L'ergot 120 est ici remplacé par le bord supérieur 121 des branches verticales 94 du coulisseau 92.

Lors de la commande du déverrouillage, l'écrou tourne dans le sens indiqué par la flèche de la figure 8 et il provoque le déplacement vertical vers le haut de la vis 76 jusqu'à la position illustrée sur la figure 9 dans laquelle le pion 123 s'étend en regard du bord supérieur 121 du coulisseau 92 et immobilise donc en rotation l'écrou 82 par rapport à la vis 76 dans la position extrême de déverrouillage.

Afin de s'assurer que cette position s'effectue toujours dans la même position relative angulaire de l'écrou 82 par rapport au coulisseau 92, l'une des deux parties du bord supérieur 121, celle de droite en considérant les figures 8 et 9, est décalée verticalement vers le bas de façon à éviter que le pion 123 ne vienne se bloquer contre cette partie du bord supérieur.

Lors du déverrouillage, la rampe 125 facilite le franchissement du bord supérieur 121 le plus haut comme cela a été expliqué précédemment en association avec l'ergot 120 et le pion 122.

## Revendications

1. Antivol de direction de véhicule automobile du type comportant un pêne de verrouillage coulissant (28) dont une extrémité est reçue dans un logement (16) formé dans un organe rotatif (10, 14) de la colonne de direction, sous l'action de moyens élastiques de rappel (60), et du type comportant des moyens d'escamotage du pêne (28), à l'encontre de l'effort de rappel qui lui est appliqué par les moyens élastiques (60), pour libérer la colonne de direction, et les moyens d'escamotage comportent un moteur électrique (30) tournant dont l'arbre de sortie (48) agit sur le pêne de verrouillage coulissant (28) par l'intermédiaire de moyens de transmission (32) qui convertissent son mouvement de rotation en un mouvement de translation rectiligne parallèle à la direction de coulissement du pêne (28), caractérisé en ce que l'axe de rotation (48) du moteur électrique est agencé parallèlement à la direction de coulissement du pêne (28), en ce que les moyens de transmission (32) comportent un mécanisme du type vis-écrou (76, 82) dont la vis (76) (32) est liée en translation au pêne de verrouillage (28, 92) et est immobilisée en rotation, et en ce que l'écrou (82) du mécanisme vis-écrou (32) est un pignon denté (84) taraudé en son centre (80), qui coopère avec un pignon d'entraînement (50) entraîné en rotation par le moteur électrique (30) et qui est immobilisé en translation.

2. Antivol selon la revendication 1, caractérisé en ce que le pignon d'entraînement (50) est porté par l'arbre de sortie (48) du moteur électrique (30).

3. Antivol selon l'une des revendications 1 ou 2, caractérisé en ce que le pêne de verrouillage (28) est lié en translation à un coulisseau (92) sur lequel agissent des moyens élastiques de rappel (60) qui sollicitent en permanence le pêne (28) vers sa position de verrouillage, et en ce que le coulisseau (92) est relié en translation à l'organe de sortie (76, 86) des moyens de transmission (32) par des moyens de liaison (88, 98, 114) qui autorisent un déplacement relatif du coulisseau (92) par rapport à l'organe de sortie (76, 86), à l'encontre de l'effort exercé par les moyens élastiques de rappel (60).

4. Antivol selon la revendication 3 prise en combinaison avec la revendication 2 , caractérisé en ce que l'organe de sortie (76, 86) est constitué par l'extrémité (86) de la vis (76) du mécanisme vis-écrou (32) qui est reçue en coulissement dans une lumière (98) du coulisseau (92) dont les extrémités opposées (100, 118) délimitent la course maximale de déplacement relatif du coulisseau (92) par rapport à la vis (76).

5. Antivol selon l'une quelconque des revendications 1 à 4, caractérisé en ce qu'il comporte un boîtier (24, 26) dans lequel la vis (76) du mécanisme vis-écrou (32) est guidée en translation et est immobilisée en rotation, et qui comporte un logement pour l'écrou du mécanisme (32) et un logement pour le corps du moteur électrique (30).

6. Antivol selon la revendication 5 prise en combinaison avec l'une des revendications 3 ou 4, caractérisé en ce que le coulisseau (92) est guidé en coulissement dans le boîtier (24, 66) et en ce que les moyens élastiques (60) de rappel du coulisseau (92) sont interposés entre le boîtier (24, 58, 64) et le coulisseau (92, 112).

7. Antivol selon l'une quelconque des revendications 1 à 6, caractérisé en ce qu'il comporte des moyens de butée (120, 122 - 121, 123) pour limiter la rotation de l'écrou (82) par rapport à la vis (76) du mécanisme vis-écrou (32) pour déterminer les deux positions extrêmes de la vis (76) par rapport à l'écrou (82).

## Claims

1. A motor vehicle anti-theft steering lock device, of the type comprising a sliding locking bolt (28), one end of which is received in a recess (16) formed in a rotary member (10, 14) of the steering column, under the action of resilient return means (60), and of the type including means for retracting the bolt (28) against the return force applied to it by the resilient means (60), whereby to release the steering column, and the retracting means comprise a rotary electric motor (30), the output shaft (48) of which acts on the sliding locking bolt (28) through transmission means (32) which convert its rotary motion into straight line motion in translation parallel to the direction of sliding movement of the bolt (28), characterised in that the axis of rotation (48) of the electric motor is disposed parallel to the direction of sliding movement of the bolt (28), in that the transmission means (32) include a mechanism (76, 82) of the leadscrew and nut type, the leadscrew (76) is coupled in translation to the locking bolt (28, 92) and is held against rotation, and in that the nut (82) of the leadscrew and nut mechanism (32) is a toothed pinion (84) having a central thread (80) which cooperates with a drive pinion (50) driven in rotation by the electric motor (30), and which is held against movement in translation.

2. An anti-theft device according to Claim 1,
characterised in that the drive pinion (50) is carried by the output shaft (48) of the electric motor (30).

3. An anti-theft device according to Claim 1 or Claim 2, characterised in that the locking bolt (28) is coupled in translation to a slide piece (92), on which there act resilient return means (60) which permanently bias the bolt (28) towards its locking position, and in that the slide piece (92) is coupled in translation to the output member (76, 86) of the transmission means (32) by coupling means (88, 98, 114) which permit relative displacement of the slide piece (92) with respect to the output member (76, 86) against the force exerted by the resilient return means (60).

4. An anti-theft device according to Claim 3 taken in combination with Claim 2, characterised in that the output member (76, 86) consists of an end portion (86) of the leadscrew (76) of the leadscrew and nut mechanism (32), which is received in sliding relationship in a through aperture in the slide piece (92), the opposed ends (100, 118) of which define the maximum course of travel in relative displacement of the slide piece (92) with respect to the lead screw (76).

5. An anti-theft device according to any one of Claims 1 to 4, characterised in that it includes a casing (24, 26) in which the leadscrew (76) of the leadscrew and nut mechanism (32) is guided in translation and held against rotation, and which includes a housing for the nut of the mechanism (32) and a housing for the body of the electric motor (30).

6. An anti-theft device according to Claim 5 taken in combination with Claim 3 or Claim 4, characterised in that the slide piece (92) is guided in sliding movement in the casing (24, 26), and in that the resilient return means (60) for the slide piece (92) are interposed between the casing (24, 58, 64) and the slide piece (92, 112).

7. An anti-theft device according to any one of Claims 1 to 6, characterised in that it includes abutment means (120, 122 - 121, 123) for limiting the rotation of the nut (82) with respect to the leadscrew (76) of the leadscrew and nut mechanism (32), so as to determine the two extreme positions of the leadscrew (76) with respect to the nut (82).

## Patentansprüche

1. Lenkradschloß für Kraftfahrzeuge mit einem verschiebbaren Riegel (28), von dem ein Ende unter der Einwirkung elastischer Rückstellelemente (60) von einem Sitz (16) aufnehmbar ist, der in einem drehbaren Organ (10, 14) der Lenksäule angeordnet ist, und mit Elementen zum Einziehen des Riegels (28) gegen die auf ihn von elastischen Elementen (60) ausgeübte Rückstellkraft zur Freigabe der Lenksäule, und wobei die Einziehelemente einen Elektromotor (30) umfassen, dessen Abtriebswelle (48) auf den verschiebbaren Riegel (28) über Antriebselemente (32) einwirkt, welche seine Drehbewegung in eine geradlinige, parallel zu der Gleitrichtung des Riegels (28) verlaufende Translationsbewegung umwandeln, dadurch gekennzeichnet, daß die Drehachse (48) des Elektromotors parallel zu der Gleitrichtung des Riegels (28) angeordnet ist, daß die Antriebselemente (32) einen Gewindespindel-Mutter-Trieb (76, 82) umfassen, wobei die Gewindespindel (76) (32) bei der Translationsbewegung mit dem Riegel (28, 92) verbunden ist und an einer Drehung gehindert wird, und wobei die Mutter (82) des Gewindespindel-Mutter-Triebes (32) aus einem Ritzel (84) mit einem Gewinde in seiner Mitte (80) besteht, welches mit einem durch den Elektromotor (30) angetriebenen Antriebsritzel (50) zusammenwirkt und an einer Translationsbewegung gehindert wird.

2. Lenkradschloß nach Anspruch 1, dadurch gekennzeichnet, daß das Antriebsritzel (50) auf der Abtriebswelle (48) des Elektromotors (30) angeordnet ist.

3. Lenkradschloß nach Anspruch 1 oder 2, dadurch gekennzeichnet, daß der Riegel (28) bei der Translationsbewegung mit einem Gleitstück (92) verbunden ist, auf das die elastischen Rückstellelemente (60) einwirken, die den Riegel (28) ständig in Richtung auf seine Verriegelungsstellung belasten, und daß das Gleitstück (92) bei der Translationsbewegung mit dem Austrittsorgan (76, 86) der Antriebselemente (32) durch Verbindungselemente (88, 98, 114) verbunden ist, die eine relative Verschiebung des Gleitstücks (92) gegenüber dem Austrittsorgan (76, 86) gegen die Kraft ermöglichen, die von den elastischen Rückstellelementen (60) ausgeübt wird.

4. Lenkradschloß nach Anspruch 3 in Verbindung mit Anspruch 2, dadurch gekennzeichnet, daß das Austrittsorgan (76, 86) aus einem Ende (86) der Gewindespindel (76) des Gewindespindel-Mutter-Triebes (32) besteht, das während der Gleitbewegung von einer Öffnung (98) des Gleitstückes (92) aufgenommen wird, deren sich gegenüberliegenden Enden (100, 118) den maximalen Hub der relativen Verschiebung des Gleitstücks (92) in bezug auf die Gewindespindel (76) begrenzen.

5. Lenkradschloß nach einem der Ansprüche 1 bis 4, dadurch gekennzeichnet, daß das Lenkradschloß ein Gehäuse (24, 26) umfaßt, in dem die Gewindespindel (76) des Gewindespindel-Mutter-Triebes (32) bei der Translationsbewegung geführt und an der Drehung gehindert wird und das einen Sitz für die Mutter des Triebes (32) und einen Sitz für das Gehäuse des Elektromotors (30) umfaßt.

6. Lenkradschloß nach Anspruch 5 in Verbindung mit einem der Ansprüche 3 oder 4, dadurch gekennzeichnet, daß das Gleitstück (92) während der Gleitbewegung in dem Gehäuse (24, 66) geführt wird und daß die elastischen Rückstellelemente (60) zwischen dem Gehäuse (24, 58, 64) und dem Gleitstück (92, 112) angeordnet sind.

7. Lenkradschloß nach einem der Ansprüche 1 bis 6, dadurch gekennzeichnet, daß das Lenkradschloß Anschlagelemente (120, 122-121, 123) zur Begrenzung der Drehung der Mutter (82) gegenüber der Gewindespindel (76) des Gewindespindel-Mutter-Triebes (32) umfaßt, um die beiden Endstellungen der Gewindespindel (76) gegenüber der Mutter (82) festzulegen.
